# EUROPEAN PATENT APPLICATION

(11) **EP 4 729 204 A1**
(43) Date of publication of application: **22.04.2026**
(21) Application number: 24219642.6
(22) Date of filing: 13.12.2024
(51) Int. Cl.: B22C 5/00, B22C 5/10, C21C 1/08, C22B 7/00, C22B 7/02

(54) **METHOD OF PROCESSING AND RE-MANAGING POST-REGENERATION DUST GENERATED IN THE PROCESS OF DRY MECHANICAL REGENERATION OF USED MOULDING AND CORE SANDS WITH FURFURYL RESIN AND/OR SANDS BOUND WITH OTHER ORGANIC BINDERS CONTAINING CARBON, INCLUDING SANDS WITH PHENOLIC, ALKYD AND/OR UREA BINDERS**

(30) Priority: 15.10.2024 PL 45004124
(71) Applicant: Akademia Gorniczo-Hutnicza im. Stanislawa Staszica w Krakowie, 30-059 Krakow (PL)
(72) Inventor: BOBROWSKI, Artur, 32-088 Owczary (PL); GRABOWSKA, Beata, 31-214 Kraków (PL); KACZMARSKA, Karolina, 30-023 Kraków (PL)
(74) Representative: Pietruszynska, Elzbieta

(57) **Abstract**

The subject of the invention includes a method for processing post-regeneration dusts generated in the process of dry mechanical regeneration of used moulding and core sands with furfuryl resin, as well as sands bound with other organic binders containing carbon, including sands with phenolic, alkyd and/or urea binders, characterized in that (a) waste post-regeneration dusts generated in the process of regeneration of used moulding and core sands with furfuryl resin, and/or sands bound with other organic binders containing carbon, including sands with phenolic, alkyd and/or urea binders, are provided as the starting product; (b) said starting product is subjected to a pyrolysis process in an inert gas atmosphere or vacuum, at a temperature of 550-1000°C, and (c) a pyrolysis product is obtained which is characterized by an alkaline pH and reduced leachability of harmful substances during waste storage relative to the starting product. The invention further includes the pyrolysis product and its use for reuse or disposal by reducing the negative impact on the environment during its subsequent storage, including its reuse in industry, especially as a carburizer for cast iron, a substitute for carbon black and silica in the tire production process, or a reducing agent in metal recovery processes from oxides.

## Description

### Field of invention

The subject of the invention is a method for processing and re-managing post-regeneration dust generated in the process of regeneration of used moulding and core sands with furfuryl resin , and/or sands bound with other organic binders containing carbon, including sands with phenolic, alkyd and/or urea binders.

### Background

Moulding and core sands prepared with the use of organic binders have been used in foundry for many years. Their main advantages include good reproduction of the mould cavity, high mechanical properties, good technological properties (good fluidity, good knock-out properties, susceptibility to regeneration). A disadvantage, however, is the tendency to emit harmful gases during pouring with liquid metal, which are created as a result of thermal degradation of the binder. Susceptibility to mechanical regeneration processes, consisting in removing the used binder from the grain shell of the matrix, causes the formation of a dusty fraction of the hardened binder. Due to the use of organic furfuryl resin, most often hardened with organic acids or a mixture of organic and inorganic acids with different sulphur content, the generated dust constitutes hazardous waste and cannot be sent to landfills. Foundries most often commission their collection to specialist external companies.

In the literature, there are attempts to manage post-regeneration dust from moulding sands with furfuryl binder, which were mainly related to cogeneration processes, i.e. combustion of organic residues in order to recover thermal energy. As a result of thermal treatment, dust is neutralized, but significant energy inputs are necessary and a high-efficiency installation for capturing and burning gaseous products of thermal decomposition is necessary.

### Present state of art

There is a known method of dust disposal described in patent DE 4321123, which consists in burning a fluidized sand bed at a temperature of about 550°C, where the dust is partially burned. In a further stage, it is directed to a heat energy generator.

There is also a known patent description PL 230437 B1, which consists of on the thermal impact of exhaust gases at temperatures ranging from 600 to 900°C. Dust is suspended in a gas mixture stream conducted by a heat generator in a vertical plane and in a 180° inverted "U" shape. Organic dust is introduced on the rising branch of the stream flow and exhaust gases are discharged from the falling branch to a heat recovery, dust removal and emission installation connected under vacuum.

However, in the current state of the art, there is no information on the use of a specific method for processing and re-managing post-regeneration dust generated during the process of dry mechanical regeneration of used moulding and core sands with furfuryl resin and other organic binders containing carbon, both for the purpose of their neutralisation and to reduce the negative impact on the environment during their subsequent storage or re-use in the industry.

Meanwhile, there is still a need to seek new ways of processing post-regeneration dusts as above in order to neutralize them and reuse them in industry.

Therefore, the aim of the invention is to eliminate the above inconveniences which are significant from the point of view of environmental protection and which at the same time are in line with the assumptions of a circular economy.

The invention solves this problem by means of a new method of processing post-regeneration dust generated in the process of dry mechanical regeneration of used moulding and core sands with furfuryl resin, and/or sands bound with other organic binders containing carbon, including sands with phenolic, alkyd and/or urea binders, both for the purpose of their neutralisation in order to reduce the negative impact on the environment during their subsequent storage or for reuse in industry in accordance with the attached patent claims.

### Disclosure of the Invention

According to the present invention, the method of processing post-regeneration dusts generated in the process of dry mechanical regeneration of used moulding and core sands with furfuryl resin, as well as sands bound with other organic binders containing carbon, including sands with phenolic, alkyd and/or urea binders, is characterized in that
(a) waste post-regeneration dust generated in the process of regeneration of used moulding and core sands with furfuryl resin and/or sands bound with other organic binders containing carbon, including sands with phenolic, alkyd and/or urea binders, is supplied as a starting product;
(b) this starting product is subjected to a pyrolysis process in an inert gas atmosphere or vacuum at a temperature of 550-1000°C,
(c) a pyrolysis product is obtained which is characterized by an alkaline pH and reduced leaching of harmful substances during waste storage relative to the starting product.

Preferably, according to the invention, a starting product characterized by an acidic pH reaction is used.

Preferably, according to the invention, processing of the waste dust in (b) leads to obtaining a pyrolysis product containing by weight carbon in the amount of 60-95%, silica in the amount of 1-40%, sulfur in the amount of 0.1-2%, iron in the amount of 0.1-2%, and other trace elements in the amount of less than 1% in total.

Preferably, according to the invention, nitrogen, argon or a mixture thereof is used as the inert gas in the pyrolysis process .

Preferably, according to the invention, a temperature of 750°C is used in the pyrolysis process .

The invention further includes a pyrolysis product obtainable by the method of the invention.

The invention also covers the use of the pyrolysis product of post-regeneration dust generated in the process of regeneration of used moulding and core sands with furfuryl resin, obtained by the method according to the invention or as defined above, for re-use or disposal by reducing the negative impact on the environment during its subsequent storage.

The invention also covers the use of the pyrolysis product of sands bound with other organic binders containing carbon, including sands with phenolic, alkyd and/or urea binders, obtained by the method according to the invention or defined above, for reuse or disposal by reducing the negative impact on the environment during its subsequent storage.

Preferably, the invention covers the use of the product for reuse in industry, in particular as a carburizer for cast iron, or a substitute for carbon black and silica in the tire production process, or a reducing agent in metal recovery processes from oxides.

### Beneficial effects and advantages of the invention

Mentioned above, the elimination of inconveniences is related to the pyrolytic solid phase obtained in accordance with the invention, which, in contrast to the initial post-regeneration dust, does not pose a threat to the environment during storage, since the level of leaching of harmful substances is several or even tens of times lower compared to the untreated material, i.e. the dust in its starting form - see example 1 below.

Most importantly, all parameters of the product obtained by the method according to the invention meet the requirements for storage in neutral waste landfills. Moreover, the product obtained by the method according to the invention as a solid phase is a material that can be used both as a carburizer directly in the foundry or utilized in other industries.

The product obtained by the method according to the invention contains carbon in the form of an amorphous phase and a graphite-like phase, and the product sample shows high homogeneity.

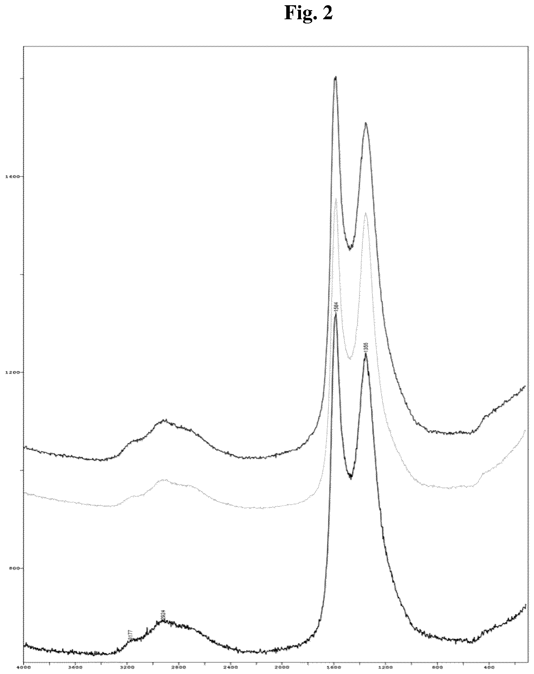

In turn, microscopic observation shows that the solid phase consists of grains of very fine quartz sand covered with a thin layer of carbon and crushed fragments of coal, which is not a typical pyrolytic carbon, but rather a form of partially ordered carbon structure (carbonizate), which is confirmed by the analysis of Raman spectra (see Fig. 2).

The present invention is illustrated in the attached drawings in embodiments where :

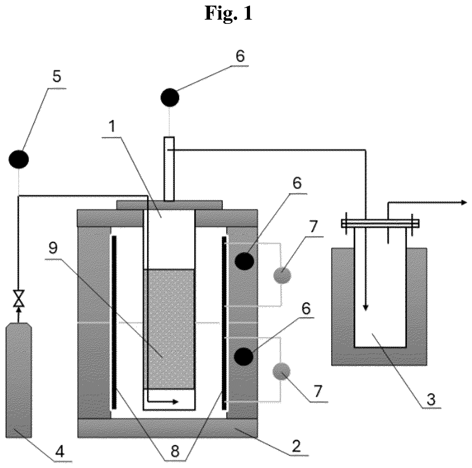

- Fig. 1: shows a diagram of the pyrolysis process station, which was carried out in a laboratory installation in a fixed bed, where the following markings are given: 1 - retort, 2 - resistance furnace with two heating sections, 3 - condensing cooler, 4 - cylinder with nitrogen gas and reducer, 5 - flow meter, 6 - temperature recorder, 7 - voltage meters, 8 - winding of the resistance furnace, 9 - material sample, and
- Fig. 2: shows the analysis of Raman spectra performed for the product obtained by the method according to the invention. Characteristic points occur at wave numbers 1584 and 1355 cm⁻¹.

### Embodiments of the invention

### Example 1

According to the invention, post-regeneration waste dust generated in the process of regeneration of used moulding and core sands with furfuryl resin and/or and/or sands bound with other organic binders containing carbon, including sands with phenolic, alkyd and/or urea binders, can be used as a starting product.

According to the invention, post-regeneration dusts generated in the process of dry regeneration of used moulding sands, obtained from a cast iron foundry, are subjected to a pyrolysis process as in Fig. 1 in a two-zone furnace 2 at a temperature of 750°C, with a heating rate of 5°C/min, in a nitrogen atmosphere. After reaching the set temperature, the dust was held in the retort 1 for 60 minutes. As a result of the pyrolysis process, a solid (96.3%), liquid (1.3 %) and gaseous (2.4%) phase was obtained. The liquid phase is a light blue-violet liquid with no noticeable odour, the composition of which is mainly water (approximately 90%), and the remaining part is a mixture of organic components. The gaseous phase is flammable components burnt during the process.

The chemical composition of post-regeneration dust generated in the process of dry regeneration of used moulding and core sands with furfuryl resin used in accordance with the invention may vary depending on the specific iron foundry, including the type of resin used, hardener, method and intensity of the regeneration process, power of exhaust fans, etc. Chemical elements such as P, Mn, Ti usually come from liquid cast iron, the remaining ones as impurities, e.g. from scrap.

The delivered sample of post-regeneration dust generated in the process of dry regeneration of used moulding sands in the amount of 300 g was placed in retort 1 and then the system was flushed with nitrogen. The flushing time was 30 minutes. The pyrolysis process was carried out in a nitrogen atmosphere with a flow of 100 cm³/min and a heating rate of 5°C/min. After reaching the assumed temperature of 750°C, the 300 g sample was kept in the heating furnace 2 for 60 minutes. Until room temperature was reached, retort 1 was flushed with nitrogen to remove air. After cooling together with the furnace, the mass of the solid and liquid product in the cooling and condensation system 3 was measured. The amount of gaseous product was determined based on the mass difference according to the equation: Total mass of the sample - mass of the solid product - mass of the product in the liquid phase = mass of the gaseous phase.

The method of thermal processing of post-regeneration dust generated in the process of dry regeneration of used moulding sands is characterised in that the waste post-regeneration dust is subjected to a pyrolysis process in a nitrogen atmosphere at a heating rate of 2-50°C/min, preferably 5°C/min, at a temperature of 550 - 1000°C, preferably at a temperature of 750°C.

Post-regeneration dust in its starting state is characterized by an acidic reaction, and its bulk density of 950 kg/m³ originating from iron foundries, from dry mechanical regeneration of used moulding sands, makes it relatively difficult to load and transport and requires the use of special means of transport to ensure safety.

According to the invention, the pyrolysis process yielded a solid phase containing 92% carbon, 4.7% silica, 1.3 % Al₂O₃, 0.3% sulfur, 0.7% Fe and trace amounts of other elements K , Ca, Na, P, Cr, Mn, Ti. The chemical composition (quantitative) was analyzed using the X-ray diffraction method.

Table 1 presents the mass balance of pyrolysis products of post-regeneration dust.

**Table 1. Mass balance of pyrolysis products of post-regeneration dust, %**

| **Solid product** | **Liquid product** | **Gas product** |
|---|---|---|
| 96.3 | 1.3 | 2.4 |

Table 2 presents selected physicochemical parameters of post-regeneration dust before and after the pyrolysis process.

**Table 2. Selected physicochemical parameters of post-regeneration dust before and after the pyrolysis process**

| | **pH** | **loss, %** | **content, %** | **Sulfur content, %** |
|---|---|---|---|---|
| Regeneration dust before the pyrolysis process | 3.8 | 28 | 15.6 | 1.48 |
| Regeneration dust from the pyrolysis process | 8.5 | - | 92.0 | 0.3 |

Accordingly, the sulfur content after the pyrolysis process is at a relatively low level, which suggests that it was removed during the pyrolysis process by the method of the invention, and the content of other elements after the pyrolysis process is trace. The chemical reaction pH changes from acidic in the range of 1-5 before the pyrolysis process to alkaline in the range of 7.5-11 after the pyrolysis process, which is more favorable from the environmental and potential storage point of view.

Table 3 presents a comparison of selected parameters of the leaching of harmful substances from post-regeneration dust before and after the pyrolysis process.

**Table 3. Comparison of the leaching of selected substances before and after the pyrolysis process**

| **Indicator** | **Before the pyrolysis process** | **After the pyrolysis process** |
|---|---|---|
| Mineral Oil Index | 34 | 19.8 |
| BTEX** | 4.19 | <0.05 |
| Styrene | 0.170 | <0.05 |
| Fluorides | 34.7 | 19 |
| Sulfur | 527 | <100 |
| Dissolved organic carbon | 290 | <5.00 |
| Solid dissolved compounds | 1050 | 160 |
| BTEX** | 4.19 | <0.5 |
| [**BTEX is a volatile aromatic hydrocarbon including a mixture of benzene, toluene, ethylbenzene and o-, m- and p-xylenes.] | | |

In accordance with the invention, as a result of the pyrolysis process, a significant reduction in the leaching of harmful substances during the storage of waste - the pyrolytic solid phase - was achieved, as the level of leaching of harmful substances is several or even several dozen times lower compared to the unprocessed material in the starting form of post-regeneration dust.

According to the invention, the pyrolysis process allows for a significant reduction in the leachability of harmful substances, and thus reduces the negative impact of waste dust from the dry regeneration of used moulding and core sands on the environment.

During the industrial test, it unexpectedly turned out that the pyrolytic solid carbon phase can be used as a carburizer for iron alloys.

### Example 2

The melt was carried out in one of the Polish iron foundries. The starting material was phosphorus cast iron. Table 4 presents the batch to the cupola.

**Table 4. Mass composition of the cupola furnace batch**

| **Ingredient of the batch** | **Quantity, kg** |
|---|---|
| Machine scrap | 350 |
| Own scrap, circulation | 200 |
| Crude iron | 200 |
| Coke | 95 |
| Limestone | 35 |
| Ferro silicon | 9 |

The cast iron was melted in a cold blast cupola with a diameter of 800 mm, with oxygen injection, with a bare jacket above the melting zone, intensively cooled with water. After reaching the tapping temperature of 1510°C, the weighed carburizer in the amount of 20 kg was placed on the bottom of a 5 ton ladle and a sample of the cast iron was taken to determine the starting chemical composition, including carbon content, and then the tapping process was started. During the tapping of the liquid cast iron, the carburizer was subjected to intensive mixing in the ladle, with a simultaneous process of burning carbon in the cast iron (whereas the standard carbon loss in foundry conditions is 0.15-0.20%). Then the liquid cast iron was modified with ferrosilicon, transported and poured into a furnace maintaining the temperature at the pouring station, where a sample was taken again to determine the composition of the cast iron. Time between sampling:
- From tapping to first composition measurement in the holding furnace: 7 minutes,
- Between first and second composition measurement in the holding furnace: 10 minutes.

Table 5 shows the main components of cast iron before and after carburizing.

**Table 5. Chemical composition of cast iron before and after carburizing**

| **Alloy component** | **Before carburizing (on the cupola trough)** | **After carburizing - holding furnace, first measurement** |
|---|---|---|
| C | 3,530 | 3,490 |
| Si | 2,040 | 2,400 |
| Mn | 0.350 | 0.353 |
| P | 0.165 | 0.179 |
| S | 0.096 | 0.109 |
| Cr | 0.116 | 0.105 |
| No | 0.072 | 0.067 |
| Cu | 0.178 | 0.156 |

The industrial test carried out shows that the carburizer in the form of a solid carbonization fraction pyrolytic dust from post-regeneration dust generated during the dry mechanical regeneration process can act as a carburizer for iron alloys.

According to the adopted assumptions, the loss of carbon from the moment of tapping to the moment of pouring into the holding furnace is usually 0.15-0.20%. The addition of carbonizate (20 kg per 5 tons of cast iron) was calculated so that at 100% carbon yield the carbon content would increase by 0.20%. However, it should be assumed that the dust fraction of the pyrolytic solid phase causes some of it to undergo convective lifting during ladle pouring and does not participate in carburization. Based on literature data [1], it should be assumed that some elements (alloy type) affect its susceptibility to carburization.

However, considering that the starting cast iron had a carbon content of 3.53% and the assumed carbon loss resulting from high-temperature firing was between 0.15 and 0.20%, the use of a carburizer in the form of carbonizate allowed the carbon content to remain close to the starting value.

It should also be assumed that introducing carbonizate into cast iron in the form of briquettes or replacing the dust fraction with a much coarser one could improve coal yield without the loss resulting from convective lifting during pouring of the ladle.

In summary, the use of powdered solid phase carbonizate allows for a 50% carbon recovery in cast iron with the composition given in Table 5, under the process conditions described above.

### Other uses

Based on the analysis of the composition of the post-pyrolysis solid phase and a literature review, it was found that it can be used as:
- A replacement for carbon black and silica in the tire production process and an additional desirable source of sulfur [2]
- Reducing agent in the processes of recovery of pure elements from waste materials containing valuable elements in the form of metal oxides, where other carbon materials are currently used (e.g. the Waelz overflow process).

### Literature

[1] Janerka K. Naw 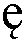 glanie cieklych stopów zelaza. Wydawnictwo Politechniki Śl 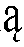 skiej, Gliwice 2010.
[2] Yuko Ikeda · Atsushi Kato Shinzo Kohjiya · Yukio Nakajima Rubber Science A Modern Approach . ISBN 978-981-10-2937-0, Springer 2018. https://doi.org/10.1007/978-981-10-2938-7

## Claims

1. A method of processing post-regeneration dust generated in the process of dry mechanical regeneration of used moulding and core sands with furfuryl resin, as well as sands bound with other organic binders containing carbon, including sands with phenolic, alkyd and/or urea binders, **characterised in that**
(a) waste post-regeneration dust generated in the process of regeneration of used moulding and core sands with furfuryl resin and/or sands bound with other organic binders containing carbon, including sands with phenolic, alkyd and/or urea binders, is supplied as a starting product;
(b) this starting product is subjected to a pyrolysis process in an inert gas atmosphere or vacuum at a temperature of 550-1000°C,
(c) a pyrolysis product is obtained which is **characterized by** an alkaline pH and reduced leaching of harmful substances during waste storage relative to the starting product.

2. The method according to claim 1, **characterized in that** the starting product **characterized by** an acidic pH reaction is used .

3. The method according to claim 1 or 2, **characterized in that** the processing of waste dust in (b) leads to obtaining the pyrolysis product containing by weight carbon in an amount of 60-95%, silica in an amount of 1-40%, sulfur in an amount of 0.1-2%, iron in an amount of 0.1-2%, and the remaining trace elements in an amount of less than 1% in total.

4. The method according to any of the claims 1-3, **characterized in that** nitrogen, argon or a mixture thereof is used as the inert gas in the pyrolysis process.

5. The method according to any of the claims 1-4, **characterized in that** the pyrolysis process uses a temperature of 750°C.

6. The pyrolysis product obtained by the method according to any of the claims 1-5.

7. An use of the pyrolysis product of post-regeneration dusts generated in the process of regeneration of used moulding and core sands with furfuryl resin obtained by the method according to any of the claims 1-5, or as defined in the claim 6, for re-use or disposal by reducing the negative impact on the environment during its subsequent storage.

8. The use of the pyrolysis product of sands bound with other organic binders containing carbon, including sands with phenolic, alkyd and/or urea binders, obtained by the method according to any of the claims 1-5, or as defined in the claim 6, for reuse or disposal by reducing the negative impact on the environment during its subsequent storage.

9. The use of the pyrolysis product according to the claim 7 or 8, **characterized in that** it is for reuse in industry, in particular as a carburizer for cast iron, or a substitute for carbon black and silica in the tire production process, or a reducing agent in the recovery of metals from oxides.
